(19) Europäisches Patentamt
European Patent Office
Office européen des brevets

(11) Veröffentlichungsnummer: **0 155 531 B1**

# (12) EUROPÄISCHE PATENTSCHRIFT

(45) Veröffentlichungstag der Patentschrift: **24.04.91**

(51) Int. Cl.5: **C01G 49/02**, C09C 1/24

(21) Anmeldenummer: **85101951.3**

(22) Anmeldetag: **22.02.85**

## (54) Verfahren zur Herstellung kobalthaltiger, isotroper magnetischer Eisenoxide.

(30) Priorität: **02.03.84 DE 3407722**

(43) Veröffentlichungstag der Anmeldung:
**25.09.85 Patentblatt 85/39**

(45) Bekanntmachung des Hinweises auf die Patenterteilung:
**24.04.91 Patentblatt 91/17**

(84) Benannte Vertragsstaaten:
**DE FR GB NL**

(56) Entgegenhaltungen:
**DE-A- 2 705 967**
**DE-A- 3 101 834**
**DE-B- 1 907 236**
**US-A- 3 720 618**

**PATENTS ABSTRACTS OF JAPAN, Band 9, Nr. 21 (C-263)[1744], 29.Januar 1985; & JP - A - 59 169 937 (HITACHI MAXELL K.K.) 26.09.1984**

(73) Patentinhaber: **BASF Aktiengesellschaft**
**Carl-Bosch-Strasse 38**
**W-6700 Ludwigshafen(DE)**

(72) Erfinder: **Steck, Werner, Dr.**
**Auerstrasse 4**
**W-6700 Ludwigshafen(DE)**
Erfinder: **Jakusch, Helmut, Dr.**
**Lorscher Ring 6 c**
**W-6710 Frankenthal(DE)**
Erfinder: **Ebenhoech, Franz Ludwig, Dr.**
**Philipp-Stempel-Strasse 9**
**W-6700 Ludwigshafen(DE)**

**EP 0 155 531 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft ein Verfahren zur Herstellung kobalthaltiger isotroper magnetischer Eisenoxide der Formel $(Co_xFe_{1-x})O[Fe_2O_3]$ mit Werten für x von 0,08 bis 0,8 durch Umsetzung von $\alpha$-$Fe_2O_3$ mit zweiwertigen Kobalt- und Eisenionen in alkalischem Medium in Inertgasatmosphäre.

Die Entwicklung der magnetischen Aufzeichnungsträger ist seit geraumer Zeit, insbesondere durch die Anforderungen bei der Daten- und Videosignalspeicherung, auf Aufzeichnungen in hoher Dichte gerichtet. Für diesen Zweck werden Aufzeichnungsmaterialien mit äußerst glatten Oberflächen auf der Basis von in organischen Bindemitteln feinverteilten magnetischen Materialien mit sehr hohen Koerzitivfeldstärken als besonders geeignet angesehen. Durch die mit der Erhöhung der Aufzeichnungsdichte verbundenen Verringerung der Aufzeichnungswellenlänge macht sich zunehmend die Verringerung der Ausgangsleistung durch Selbstentmagnetisierung der Aufzeichnungsschicht bemerkbar. Eine Verminderung der Entmagnetisierung ist zwar durch die Verringerung der Schichtdicke möglich. Doch sind dieser Maßnahme bei magnetische Pulver enthaltenden Bindemittelschichten aufweisenden Aufzeichnungsträgern sowohl hinsichtlich der Verringerung des vorhandenen magnetischen Materials pro Flächeneinheit, d.h. der remanenten Magnetisierung des Schichtelements als auch aus fertigungstechnischen Gründen Grenzen gesetzt. Ein anderer Weg, das Problem der geringen Schichtdicke bei dennoch ausreichender Magnetisierung zu beheben, wird mit Aufzeichnungsmaterialien auf der Basis von dünnen magnetischen Metallfilmen versucht. Hierbei treten jedoch neben den Prolemen der Herstellung solcher homogener Metallschichten vor allem mechanische Probleme bei deren Benutzung auf.

Im Hinblick auf die aufgezeigten Schwierigkeiten und im Bestreben dennoch magnetische Aufzeichnungssysteme, welche eine hohe Aufzeichnungsdichte bei hohen Ausgangspegeln aufweisen, bereitzustellen, wurde auch bereits vorgeschlagen, eine zum Aufzeichnungsträger senkrechte magnetische Aufzeichnung vorzunehmen. Hierzu müßten die Aufzeichnungsträger Schichten aufweisen, die zumindest in dem Schichtbereich, welcher dem Magnetkopf am nächsten lag, eine senkrechte Magnetisierung ermöglichte (US-A-3 052 567). In der weiteren Entwicklung dieses Prinzips wurde eine Reihe unterschiedlicher magnetischer Schichten mit einer zur Trägerfläche senkrechten magnetischen Anisotropie, meist auf der Basis von Co/Cr-Schichten, untersucht. Jedoch konnten weder die Herstellung noch die erzielbaren Eigenschaften befriedigen. Ein wesentliches Problem stellte aber auch die Entwicklung eines für die Aufzeichnungsverfahren geeigneten Magnetkopfes dar.

Ein anderer Weg zur Erhöhung der Aufzeichnungsdichte bei hoher Empfindlichkeit wurde in der Ausnutzung der Vertikalkomponente des für die Aufzeichnung verwendeten magnetischen Feldes gesehen. Hierbei wird die insbesondere bei hoher Aufzeichnungsdichte (kurzer Wellenlänge) wirksame Vertikalkomponente eines von einem Ringkopf auf der Oberfläche der magnetischen Schicht erzeugten magnetischen Feldes herangezogen. Als magnetische Materialien für solche Aufzeichnungssysteme eignen sich Produkte, die eine hohe relative Remanenz in allen Richtungen des Aufzeichnungsträgers ergeben. Hierfür eignen sich magnetische isotrope Materialien, insbesondere diejenigen, die auf der Basis der bekannten kubischen Eisenoxide, vor allem des würfelförmigen Magnetits aufgebaut sind. Die Herstellung dieses Magnetits ist bekannt, so z .B. ausgehend von $\alpha$-, $\beta$- oder $\gamma$-FeOOH zusammen mit Fe $(OH)_2$ (u.a. DE-B- 12 19 612, DE-A- 25 08 155, DE-A- 27 46 359, DE-A- 25 08 085, JP-A- 36 932/83,JP-A- 27 200/83, JP-A- 101 796/79). Diese Materialien haben jedoch den Nachteil, daß sie sich entweder hinsichtlich der magnetischen Eigenschaften, insbesondere der Koerzitivfeldstärke oder aber bezüglich der Stabilität der magnetischen Eigenschaften bei thermischer oder mechanischer Belastung, nicht für die Anwendung bei magnetischen Aufzeichnungsträgern eignen.

Aufgabe der Erfindung war es daher, ein Verfahren zur Herstellung isotroper magnetischer Eisenoxide bereitzustellen, das sich einerseits in einfacher und wirtschaftlicher Weise mit gängigen Rohstoffen bewerkstelligen läßt und andererseits ein magnetisches Material liefert, das sich durch eine isotrope Magnetisierung, durch eine für Aufzeichnungsträger geeignete hohe Koerzitivfeldstärke und darüber hinaus vor allem durch eine besonders enge Schaltfeldstärkenverteilung der magnetisierbaren Einzelpartikel auszeichnet. Diese Eigenschaften sind insbesondere für die magnetische Aufzeichnung in hoher Dichte von Bedeutung. Zur Lösung dieser Aufgabe bot sich der Einsatz von leicht zugänglichem $\alpha$-$Fe_2O_3$ als Ausgangsmaterial und die Modifikation von isotropem Magnetit mit Kobalt an.

Es wurde nun gefunden, daß sich die gestellte Aufgabe durch ein Verfahren zur Herstellung kobalthaltiger isotroper magnetischer Eisenoxide der Formel $(Co_xFe_{1-x})O[Fe_2O_3]$ mit Werten für x von 0,08 bis 0,8 lösen läßt, wenn zur Herstellung dieses Materials $\alpha$-$Fe_2O_3$ in wäßriger Suspension mit Co(II)-Ionen und Fe-(II)-Ionen bei pH-Werten von größer 8,5 und Inertgas bei Temperaturen zwischen 50 °C und dem Siedepunkt der Suspension bei Normaldruck umgesetzt wird.

Als Ausgangsmaterial für das erfindungsgemäße Verfahren wird das auf bekannte Weise erhaltene $\alpha$-

$Fe_2O_3$, das auch als Hämatit bezeichnet wird, in Form der bei seiner Herstellung angefallenen Suspension, des gewaschenen oder ungewaschenen Filterkuchens oder als getrocknetes Pigment eingesetzt. So läßt sich das $\alpha$-$Fe_2O_3$ durch Entwässerung von Eisen (III) oxidhydroxid unabhängig von dessen Herstellweise und Modifikation erhalten. Als besonders vorteilhaft hat sich seine Herstellung des $\alpha$-$Fe_2O_3$ durch Zersetzen von Eisenpentacarbonyl herausgestellt, wie beispielsweise von den DE-C- 422 269, DE-C- 22 10 279 und DE-C- 26 19 084 beschrieben. Unabhängig von der Art der Herstellung ist festzuhalten, daß $\alpha$-$Fe_2O_3$-Pulver, die eine spezifische Oberfläche nach BET von 10 bis 80 $m^2$ aufweisen, besonders bevorzugt für das erfindungsgemäße Verfahren sind.

Als Ausgangsmaterial für das erfindungsgemäße Verfahren läßt sich auch bereits Kobalt enthaltendes $\alpha$-$Fe_2O_3$ einsetzen. Derartige Materialien lassen sich ebenfalls in bekannter Weise herstellen, sei es durch gleichzeitiges Mitfällen der Kobaltionen bei der FeOOH-Synthese, durch Beaufschlagen von FeOOH mit Kobaltverbindungen oder durch gleichzeitiges Zersetzen von Eisen- und Kobaltcarbonyl.

Gemäß dem erfindungsgemäßen Verfahren wird nun eine wäßrige Suspension von $\alpha$-$Fe_2O_3$ in einem mit einer Inertgas-, vorzugsweise Stickstoffatmosphäre versehenen Rührbehälter vorgelegt. Dazu werden unter Rühren eine Fe(II)-Salzlösung, meist $FeCl_2$ oder $FeSO_4$ und gleichzeitig oder danach eine Co(II)-Salzlösung, meist $CoCl_2$ oder $CoSO_4$ hinzugefügt. Nach dem Einstellen des pH-Wertes mittels NaOH, KOH oder $NH_3$ auf Werte größer 8,5, oder bevorzugt mit den Alkalihydroxiden auf Werte größer 9, wird die Reaktionsmischung unter weiterem Rühren zwischen 5 Minuten und 10 Stunden, bevorzugt zwischen 10 Minuten und 6 Stunden bei Temperaturen zwischen 50° C und dem Siedepunkt gehalten. Danach wird die nun schwarzgefärbte Suspension filtriert, der Filterkuchen mit Wasser gewaschen und der gewaschene Filterkuchen bei Temperaturen zwischen 50 und 350° C, bevorzugt in nichtoxidierender Atmosphäre getrocknet. Das auf diese Weise erhaltene magnetische Material besteht aus isotropen Teilchen der angegebenen Formel. Isotrop bedeutet im vorgegebenen Zusammenhang, daß die remanente Magnetisierung der Teilchen in allen drei orthogonalen Richtungen sehr hoch ist und die Teilchen meist isometrisch sind.

Die erfindungsgemäß hergestellten magnetischen Eisenoxide lassen sich in bekannter Weise mit oxidierenden Gasen, wie z.B. Sauerstoff oder Luft, bei Temperaturen zwischen 120 und 450° C oxidieren. Abhängig von der jeweiligen Oxidationstemperatur haben sich Oxidationszeiten zwischen 10 Minuten und 6 Stunden als zweckmäßig erwiesen. Bei vollständiger Oxidation entsteht ein Pulver zusammengesetzt aus Kobaltferrit und Co-modifiziertem Gamma-Eisen(III)-oxid. Dabei läßt sich die genaue Strukturformel nicht angeben, da sich nicht zweifelsfrei festlegen läßt, wieviel der Kobalt(II)-Ionen sich im Gitter der Gamma-Eisen(III)oxidphase gelöst haben bzw. eingeschlossen sind. Bei nur teilweiser Oxidation kommt als dritte Phase noch Kobalt modifizierter Magnetit hinzu.

Weiterhin lassen sich die magnetischen Eisenoxide, hergestellt nach dem erfindungsgemäßen Verfahren, in ihrem magnetischen Eigenschaften, z.B. der spezifischen Magnetisierung oder zur Erhöhung der Kristallitgröße in an sich bekannter Weise in einer reduzierenden Atmosphäre, wie z.B. Wasserstoff und/oder Kohlenmonoxid und/oder mittels organischer Substanzen, die sich in Gegenwart von Eisenoxiden zersetzen, nachbehandeln. Zur Vermeidung einer Reduktion zu metallischen Phasen ist die gleichzeitige Anwesenheit von Wasserdampf zweckmäßig. Die Nachbehandlung erfolgt üblicherweise innerhalb von 10 Minuten bis 2 Stunden bei 250 bis 600° C.

Außerdem eignen sich die magnetischen Eisenoxide gemäß der Erfindung in besonderem Maße als Ausgangsmaterial für die Herstellung von kobalthaltigen Eisenteilchen, welche gleichfalls als magnetische Materialien bei der Herstellung von magnetischen Aufzeichnungsträgern Verwendung finden.

Dabei erfolgte die Herstellung der Metallteilchen in an sich bekannter Weise. Die bekannten Verfahren der Stabilisierung, insbesondere der Formstabilisierung, z.B. mit Sn(II)-Ionen gemäß DE-A- 19 07 691, mit Erdalkalikationen gemäß den DE-A- 24 34 058 und DE-A- 24 34 096, mit Phosphationen gemäß DE-A- 26 46 348, mit gleichzeitiger Verwendung anorganischer und organischer Substanzen gemäß DE-A- 32 28 669 und mit Silikaten/$SiO_2$ gemäß den JP-A- 12 17 99/77 und JP-A- 15 31 98/77, wie auch der Passivierung der pyrophoren Metallteilchen lassen sich hierbei in gleicher Weise, wie aus dem Stand der Technik bekannt, heranziehen.

Schließlich sei noch darauf hingewiesen, daß sich die erfindungsgemäß hergestellten isotropen magnetischen Eisenoxide auch zur Verwendung als Druckfarbenpigmente oder zur Herstellung magnetischer Toner eignen.

Wesentlicher Verwendungszweck der erfindungsgemäß hergestellten kobalthaltigen isotropen magnetischen Eisenoxide stellt der Einsatz als magnetisches Material bei der Herstellung von magnetischen Aufzeichnungsträgern dar. Mit ihnen lassen sich die von Koerzitivfeldstärke und Schaltfeldstärkenverteilung beeinflußten Aufzeichnungseigenschaften in überraschender Weise vorteilhaft verändern. Mit ihrer hohen relativen Remanenz in allen drei orthogonalen Richtungen lassen sie sich besonders vorteilhaft bei der

Herstellung solcher magnetischer Aufzeichnungsträger heranziehen, mit welchen die Vorteile der Aufzeichnung mittels der wirksamen Vertikalkomponente zur Erhöhung von Bilddichte und zur Speicherung hoher Frequenzen ausgenutzt werden sollen.

Die Herstellung der Aufzeichnungsträger geschieht in an sich bekannter Weise. Hierzu werden die magnetischen Materialien in polymeren Bindemitteln dispergiert. Als Bindemittel eignen sich die für diesen Zweck bekannten Verbindungen, wie Homo- und Mischpolymerisate von Polyvinylderivaten, Polyurethanen, Polyejstern und ähnliche. Die Bindemittel werden in Lösungen in geeigneten organischen Lösungsmitteln verwendet, die gegebenenfalls weitere Zusätze enthalten können. Die magnetischen Schichten werden auf starre oder biegsame Träger wie Platten, Folien und Karten aufgebracht.

Die vorliegende Erfindung wird anhand folgender Beispiele im Vergleich zu Versuchen nach dem Stand der Technik erläutert. Die angegebenen Co(II)- oder Fe(II)-Prozentgehalte beziehen sich als Gew.% auf die Gesamtverbindung. Die magnetischen Werte der Pulverproben werden mit einem Schwingmagnetometer bei einem magnetischen Feld von 160 kA/m oder nach Vormagnetisierung im Impulsmagnetisierer in einem Schwingmagnetometer gemessen. Die Werte der Koerzitivfeldstärke, $H_c$, gemessen in [kA/m], wurden bei den Pulvermessungen auf eine Stopfdichte von $\delta$ = 1,2 g/cm$^3$ bei den Oxiden und $\delta$ = 1,6 g/cm$^3$ bei den Metallpigmenten bezogen. Spezifische Remanenz ($M_r/\delta$) und Sättigung ($M_m/\delta$) sind jeweils in [nTm$^3$] angegeben. Die Sättigungsmagnetisierung bzw. Remanenz von Bändern werden in [mT] angegeben.

Die Schaltfeldstärkenverteilung (SFD, switching field distribution) ist ein Maß für die magnetische Einheitlichkeit einer i.a. aus magnetisierbaren Einzelpartikeln bestehenden Speicherschicht. Sie gibt den Magnetfeldbereich an, in dem die Einzelpartikel umschalten. Die Schaltfeldstärkenverteilung einer magnetischen Aufzeichnungsschicht spielt bei der Speicherung kurzer Wellenlängen bzw. hoher Frequenzen eine entscheidende Rolle. Eine enge SFD verringert die Übergangslänge zwischen entgegengesetzt magnetisierten Bereichen und erlaubt so eine hohe Aufzeichnungsdichte.

Als Meßgröße für SFD wird (1-S*) herangezogen. (1-S*) wird aus der Steilheit der Hysteresekurve bei M=O (d.h. Hc) gemäß der Formel $dM/dH = M_R/((1-S^*).Hc)$ gewonnen (M.L. Williams, R.L. Comstock, AIP Conf. Proc. 5, 725 (1971)).

Beispiel 1

In einem rühr- und heizbaren 1 1-Glasbehälter, versehen mit heizbarem Tropftrichter, pH- und Temperatur-Messung, wurden unter Rühren 130 g $\alpha$-$Fe_2O_3$ (hergestellt durch Zersetzen von Eisenpentacarbonyl gemäß DE-PS 422 269,

$$S_{N_2} = 35\ m^2/g)$$

und 36,7 g $CoCl_2.6\ H_2O$ unter Inertisierung des Behälters mit Stickstoffgas bei 80°C in 390 ml Wasser suspendiert bzw. gelöst. Aus einem beheizbaren Tropftrichter werden dann 117 ml einer 80°C warmen $FeCl_2$-Lösung (74,12 g $FeCl_2$) innerhalb 5 Minuten eingebracht. Anschließend wurden über den gleichen Tropftrichter 166 g einer 48 %igen NaOH innerhalb 3 Minuten zugeführt. Dabei stieg die Temperatur kurzzeitig auf 95°C an. Innerhalb von 20 Minuten wechselte der Farbton der Reaktionsmischung von rotbraun ($\alpha$-$Fe_2O_3$) über braun und dunkelbraun zu schwarz (Bildung von $(Co_xFe_{1-x})O[Fe_2O_3]$ mit x = 0,21). Insgesamt wurde die alkalische Suspension für 5 Stunden bei 80°C gehalten und nach dem Abkühlen auf Raumtemperatur filtriert, gewaschen und bei 80°C im Vakuumtrockenschrank getrocknet. Die Magnetpulvereigenschaften dieser Probe 1 sind in der Tabelle aufgeführt.

70 g der Probe 1 wurden in einem Drehrohrofen innerhalb 30 Minuten mit Luft bei 320°C zur Probe Nr. 1/ox oxidiert. Die Eigenschaften dieser Probe sind gleichfalls in der Tabelle 1 aufgeführt.

Beispiel 1a

Es wurde wie in Beispiel 1 beschrieben verfahren, jedoch wurde ein bei 500°C durch Entwässern von $\alpha$-FeOOH gewonnenes $\alpha$-$Fe_2O_3$ eingesetzt. Die Meßergebnisse dieser und einer durch Oxidation daraus gewonnenen Probe (Probe 1a/ox) sind in der Tabelle 1 angegeben.

Beispiel 1b

Es wurde wie in Beispiel 1 beschrieben verfahren, jedoch wurde ein bei 500 °C durch Entwässern von δ-FeOOH gewonnenes α-$Fe_2O_3$ eingesetzt. Die Meßergebnisse dieser und einer durch Oxidation daraus gewonnenen Probe (Probe 1b/ox) sind in der Tabelle 1 angegeben.

Beispiel 1c

Es wurde wie in Beispiel 1 beschrieben verfahren, jedoch wurde ein kobalthaltiges α-$Fe_2O_3$ eingesetzt, das durch Entwässern von α-FeOOH mit einem Kobalt(II)-Gehalt von 4,5 % und einem Phosphat-Gehalt von 0,8 % bei 500 °C gewonnen wurde. Die Meßergebnisse sind ebenso wie der durch Oxidation gewonnenen Probe (Probe 1c/ox) in der Tabelle 1 angegeben.

Tabelle 1

| $Co_{0,21}$ $Fe_{0,79}$)O[$Fe_2O_3$]-Probe | 1 | 1a | 1b | 1c |
|---|---|---|---|---|
| $H_c$ | 33 | 36,8 | 40,1 | 41,3 |
| Mm/ϱ | 96 | 69 | 71 | 72 |
| Mr/ϱ | 43 | 30 | 33 | 34 |
| SFD | 0,74 | 0,79 | 0,74 | 0,78 |
| Magnetwerte in der oxidierten Form: Probe | Nr. 1/ox | 1a/ox | 1b/ox | 1c/ox |
| $H_c$ | 46,4 | 45,7 | 49,6 | 70,6 |
| Mm/ϱ | 59 | 56 | 58 | 56 |
| Mr/ϱ | 41 | 35 | 37 | 36 |
| SFD | 0,53 | 0,56 | 0,59 | 0,60 |

Beispiel 2

In der im Beispiel 1 beschriebenen Glasapparatur wurde unter den im Beispiel 1 angegebenen Reaktions- und Aufarbeitungsbedingungen jeweils 159,6 g aus der $Fe(CO)_5$-Zersetzung erhaltenes α-$Fe_2O_3$, mit einem

$$S_{N_2}$$

von 35 $m^2/g$ und nach DE-C- 422 269 hergestellt mit Co(II)- und/oder Fe(II)-Chlorid umgesetzt. Tabelle 2 gibt die eingesetzten Mengen der verwendeten Stoffe und die erhaltenen Magnetpulverwerte wieder. Als Vorlage wurden die angegebenen Mengen für Co(II)-, Fe(II)-Salz und das α-$Fe_2O_3$ in 480 ml Wasser gelöst bzw. suspendiert. Nach einer Reaktionszeit von 1 Stunde bzw. nach 3 Stunden, wurden Zwischenproben gezogen. Ihre Magnetpulvereigenschaften sind zusammen mit den Endproben (5 Stunden Reaktionszeit) in der Tabelle 2 aufgeführt. Die Oxidation erfolgte in Abweichung vom Beispiel 1 bei 280 °C.

Tabelle 2

| Probe Nr. | Menge Me(II) (g) Fe(II) | Co(II) | Menge NaOH (g) | Probennahme nach Stunden | X | $(Co_xFe_{1-x})O[Fe_2O_3]$ Hc | Mm/ϱ | Mr/ϱ | SFD | $S_{N_2}$ | Fe(II) % | Oxidierte Form von $(Co_xFe_{1-x})O[Fe_2O_3]$ Hc | Mm/ϱ | Mr/ϱ | SFD | (Fe(II) % |
|---|---|---|---|---|---|---|---|---|---|---|---|---|---|---|---|---|
| 2/A | 55,9 | - | 108 | 1 | | 18,4 | 98 | 30 | 0,83 | | | | | | | |
| | | | | 3 | | 19,9 | 83 | 25 | 0,83 | | | | | | | |
| | | | | 5 | 0 | 18,4 | 93 | 28 | 0,77 | 5,1 | 21,2 | 19,4 | 46 | 19 | 0,72 | 5,9 |
| 2/B | 52,7 | 3,2 | 108 | 1 | | 17,8 | 89 | 32 | 0,70 | | | | | | | |
| | | | | 3 | | 20,0 | 89 | 33 | 0,69 | | | | | | | |
| | | | | 5 | 0,08 | 22,7 | 88 | 34 | 0,72 | 9,1 | 18,6 | 20,2 | 73 | 34 | 0,55 | 2,0 |
| 2/C | 39,6 | 16,2 | 108 | 1 | | 43,5 | 77 | 39 | 0,71 | | | | | | | |
| | | | | 3 | | 42,9 | 77 | 39 | 0,72 | | | | | | | |
| | | | | 5 | 0,4 | 46,1 | 75 | 37 | 0,81 | 7,8 | 14,0 | 56,1 | 58 | 39 | 0,56 | 2,1 |
| 2/D | 31,5 | 24,3 | 108 | 1 | | 52,4 | 71 | 36 | 0,69 | | | | | | | |
| | | | | 3 | | 52,2 | 71 | 35 | 0,70 | | | | | | | |
| | | | | 5 | 0,6 | 52,2 | 70 | 35 | 0,70 | 5,7 | 9,5 | 72,4 | 62 | 42 | 0,53 | 0,3 |
| 2/E | 26,5 | 32,4 | 108 | 1 | | 48 | 96 | 47 | 0,64 | | | | | | | |
| | | | | 3 | | 53,1 | 68 | 34 | 0,71 | | | | | | | |
| | | | | 5 | 0,8 | 50,9 | 77 | 38 | 0,64 | 3,1 | 10,5 | 75,5 | 65 | 44 | 0,60 | 0,9 |
| 2/F | - | 58,9 | 108 | 1 | | 20,1 | 0 | 0,1 | 1,0 | - | - | - | - | - | - | - |
| | | | | 3 | | 7,6 | 0 | 0 | 1,0 | - | - | - | - | - | - | - |
| | | | | 5 | 1,0 | 22,7 | 0 | 0,1 | 1,0 | - | - | - | - | - | - | - |

Beispiel 3

Jeweils 5 g der in den vorangehenden Beispielen und in der Tabelle 3 mit der jeweiligen Probennummer bezeichneten Muster wurden innerhalb von 8 Stunden in einem Glasrohr in einem Wasserstoffstrom

von 30 Nl/h bei 320 °C zum Metall reduziert. Die Magnetpulverwerte der resultierenden pyrophoren Pulver sind in der Tabelle 3 angegeben und mit "py" bezeichnet. Die Meßergebnisse der aus den pyrophoren Proben durch Benetzen mit Aceton in Gegenwart von Luft passivierten Proben sind in der Tabelle mit "pa" bezeichnet.

Beispiel 4

Es wurde wie in Beispiel 3 beschrieben verfahren, jedoch wurde die Probe von Beispiel 1 eingesetzt. Die Ergebnisse sind in der Tabelle 3 angegeben.

Tabelle 3

| Proben-Nr. | Einsatzstoff Proben-Nr. | Magnetwerte im Metallpigment | | | | |
|---|---|---|---|---|---|---|
| | | $Hc_{1,6}$ | $Mm/\varrho$ | $Mr/\varrho$ | SFD | |
| 3/1 | 1 | 23,9 | 175 | 47 | 0,82 | py |
| 3/2 | 1b | 33,3 | 192 | 75 | 0,76 | py |
| | | 35,0 | 155 | 61 | 0,78 | pa |
| | 1b/ox | 32,5 | 169 | 65 | 0,77 | py |
| | | 34,4 | 155 | 59 | 0,63 | pa |
| 3/3 | 1a | 41,7 | 152 | 69 | 0,77 | py |
| | | 43,1 | 140 | 65 | 0,75 | pa |
| | 1a/ox | 41,1 | 156 | 67 | 0,76 | py |
| | | 42,1 | 153 | 65 | 0,76 | pa |
| 3/2 | 1c | 41,4 | 177 | 81 | 0,66 | py |
| | | 42,6 | 166 | 77 | 0,67 | pa |
| | 1c/ox | 41,1 | 170 | 78 | 0,66 | py |
| | | 42,0 | 164 | 76 | 0,66 | pa |
| 3/5 | Nr. 2 B | 21,9 | 164 | 47 | 0,83 | py |
| | | 22,5 | 160 | 45 | 0,79 | pa |
| | Nr. 2 B/ox | 21,5 | 167 | 49 | 0,77 | py |
| | | 22,5 | 160 | 45 | 0,80 | pa |
| 3/6 | Nr. 2 C | 21,5 | 176 | 50 | 0,82 | py |
| | | 22,3 | 164 | 46 | 0,83 | pa |
| | Nr. 2 C/ox | 21,0 | 160 | 46 | 0,81 | py |
| | | 21,5 | 154 | 44 | 0,81 | pa |
| 3/7 | Nr. 2 D | 23,4 | 174 | 54 | 0,80 | py |
| | | 23,7 | 149 | 50 | 0,81 | pa |
| | Nr. 2 D/ox | 22,0 | 168 | 51 | 0,83 | py |
| | | 22,5 | 158 | 47 | 0,83 | pa |
| 3/8 | Nr. 2 E | 24,6 | 165 | 50 | 0.81 | py |
| | | 26,5 | 158 | 46 | 0,80 | pa |
| | Nr. 2 E/ox | 28,1 | 180 | 57 | 0,80 | py |
| | | 29,2 | 159 | 50 | 0,80 | pa |

Beispiel 5

Es wurde wie in Beispiel 2 beschrieben verfahren, wobei die Einsatzmengen von Beispiel 2 C übernommen wurden, Jedoch mit einer Reaktionstemperatur von 65° C (Probe 5 A) bzw. 50° C (Probe 5 B). Außerdem wurden jeweils bei einer Reaktionsdauer von 1, 3, 5 bzw. 7,5 Stunden eine Probe genommen. Die Ergebnisse sind in Tabelle 4 angegeben.

**Tabelle 4**

| Probe-Nr. | | $Hc_{1,2}$ | $Mm/\varrho$ | $Mr/\varrho$ | SFD |
|---|---|---|---|---|---|
| 5 A | (1 h) | 54,6 | 35 | 16 | 0,82 |
| | (3 h) | 46,0 | 76 | 37 | 0,75 |
| | (5 h) | 48,5 | 76 | 39 | 0,74 |
| 5 B | (1 h) | 74,4 | 13 | 7 | 0,75 |
| | (3 h) | 74,6 | 17 | 10 | 0,75 |
| | (5 h) | 73,5 | 20 | 11 | 0,74 |
| | (7,5 h) | 57,0 | 68 | 39 | 0,71 |

Beispiel 6

Es wurde wie in Beispiel 5 beschrieben verfahren, jedoch wurde ein $\alpha$-$Fe_2O_3$ mit einer Oberfläche nach BET von 20 $m^2/g$, hergestellt gemäß DE-C- 422 269 (Proben 6A) bzw. von 80 $m^2/g$, hergestellt gemäß DE-C- 22 10 279 (Proben 6 B) eingesetzt. Die Ergebnisse sind in Tabelle 5 angegeben.

**Tabelle 5**

| Probe-Nr. | | $Hc_{1,2}$ | $Mm/\varrho$ | $Mr/\varrho$ | SFD |
|---|---|---|---|---|---|
| 6 A | (1 h) | 47,7 | 77 | 42 | 0,69 |
| | (3 h) | 47,5 | 77 | 42 | 0,68 |
| | (5 h) | 49,4 | 76 | 42 | 0,68 |
| 6 B | (1 h) | 27,8 | 60 | 19 | 0,46 |
| | (3 h) | 27,4 | 61 | 19 | 0,44 |
| | (5 h) | 27,3 | 60 | 18 | 0,58 |

Beispiel 7

Es wurde wie in Beispiel 5 beschrieben verfahren, jedoch wurde die Zugabe von NaOH so geändert, daß die Reaktionssuspension einen pH-Wert von 9,5 (Proben 7A) bzw. 8,5 (Proben 7 B) aufweisen. Die

Meßergebnisse sind in der Tabelle 6 angegeben.

**Tabelle 6**

| Probe-Nr. | | $Hc_{1,2}$ | Mm/ϱ | Mr/ϱ | SFD |
|---|---|---|---|---|---|
| 7 A | (1 h) | 47,3 | 78 | 42 | 0,76 |
| | (3 h) | 47,4 | 80 | 44 | 0,74 |
| | (5 h) | 46,7 | 82 | 45 | 0,71 |
| 7 B | (3 h) | 38,9 | 87 | 45 | 0,71 |
| | (5 h) | 38,8 | 86 | 45 | 0,72 |

Beispiel 8

In die Herstellsuspension der Probe 6 A (5 h) aus Beispiel 6 wurde nach der Reaktionszeit von 5 Stunden bei Raumtemperatur unter Rühren eine Wasserglaslösung entsprechend 1,2 Gew.% Si, bezogen auf die theoretische Ausbeute an $(Co_xFe_{1-x})O[Fe_2O_3]$ eingebracht. Dann wurde 30 Minuten bei dem sich eingestellten pH-Wert um 13 nachgerührt. Anschließend wurde durch Eintropfen einer wäßrigen Schwefelsäure der pH-Wert innerhalb 15 min auf 5 eingestellt und erneut 30 Minuten unter Konstanthalten dieses Wertes nachgerührt. Nach dem Filtrieren, Waschen wurde der Filterkuchen bei 80° C im Vakuum getrocknet (Probe 8). Der Gehalt an Si betrug 1,3 Gew.%. Die Meßergebnisse sind in Tabelle 7 angegeben.

Jeweils 5 g der Probe 8 wurden gemäß Beispiel 3 bei 380° C im Wasserstoffstrom reduziert (Probe 8 A) und anschließend passiviert (Probe 8 B). Die Meßergebnisse sind ebenfalls in Tabelle 7 angegeben.

**Tabelle 7**

| Probe-Nr. | $Hc_{1,2}$ | Mm/ϱ | Mr/ϱ | SFD |
|---|---|---|---|---|
| 8 | 46,7 | 73 | 39 | 0,69 |
| 8 A | 20,8 | 154 | 37 | 0,86 |
| 8 B | 21,6 | 151 | 36 | 0,86 |

Beispiel 9

100 g des nach einer Reaktionszeit von 5 Stunden erhaltenen Probe 2/D aus Beispiel 2 wurde in 1000 ml Wasser unter kräftigem Rühren suspendiert. Nach 10-minütigem Vordispergieren wurden 1 Gew.% $H_3PO_4$ als 85 %ige $H_3PO_4$ und 1 Gew.% $H_2C_2O_4.2H_2O$ hinzugefügt. Nach 30 Minuten Nachrührzeit wurde filtriert und der Filterkuchen bei 80° C getrocknet (Probe 9).

Jeweils 5 g der Probe 9 wurden gemäß Beispiel 3 bei 350° C im Wasserstoffstrom reduziert (Probe 9 A) und anschließend passiert (Probe 9 B). Die Meßergebnisse sind in der Tabelle 8 angegeben.

Tabelle 8

| Probe-Nr. | $Hc_{1,6}$ | Mm/ς | Mr/ς | SFD |
|---|---|---|---|---|
| 9 | 52,3 | 69 | 34 | 0,68 |
| 9 A | 20,7 | 169 | 47 | 0,81 |
| 9 B | 20,9 | 159 | 44 | 0,83 |

Beispiel 10

In einer mit 100 Teilen Stahlkugeln (2 mm Durchmesser) gefüllten Kugelmühle mit einem Füllvolumen von 250 Volumenteilen, wurden jeweils 50 Teile der in der Tabelle 9 angegebenen magnetischen Eisenoxide, 3 Teile eines langkettigen amphoteren, organophilen Dispergiermittels, 0,05 Teile eines Siliconöles und 0,5 Teile eines isomeren Carbonsäuregemisches mit einem Fließpunkt <5° C 6,6 Teile eines handelsüblichen isocyanatfreien Polyesterurethans aus Adipinsäure, Butandiol-1,4 und 4,4-Dicyanatodiphenylmethan mit einem K-Wert von 61 (gemessen 1 %ige Lösung in Tetrahydrofuran) und 25 Teile eines Vinylchlorid-Maleinsäureethylester-Copolymeren mit einem K-wert von 59 (ebenfalls als 1 %ige Lösung in Tetrahydrofuran gemessen), sowie 78 Teile eines Gemisches aus gleichen Teilen von Tetrahydrofuran und 1,4-Dioxan zugegeben, wobei die Eingaben der angegebenen Bindemittel in Form ihrer Lösungen in dem genannten Lösemittelgemisch erfolgte. Nach einer Dispergierdauer von 3,5 Stunden wurde die Magnetdispersion filtriert und anschließend mit einer üblichen Beschichtungseinrichtung auf eine 12 um dicke Polyethylenterephthalatfolie gegossen, so daß nach Trocknung in einem Trockenkanal und anschließendem Glättvorgang mit auf 80° C beheiztem Mehrwalzenkalander eine Schichtdicke von 5,2 µm erzielt wurde. Die an der Magnetschicht gemessenen magnetischen Eigenschaften sind in Tabelle 9 angegeben.

Tabelle 9

| Beispiel | magnet. Material Probe Nr. | Hc [kA/m] | Mr [mI] | Mr/Mm | SFD |
|---|---|---|---|---|---|
| 10 a | 1 | 46,0 | 114 | 0,54 | 0,70 |
| 10 b | 1/ox | 54,7 | 105 | 0,70 | 0,57 |

**Ansprüche**

1. Verfahren zur Herstellung kobalthaltiger, isotroper magnetischer Eisenoxide der Formel $(Co_xFe_{1-x})O\text{-}[Fe_2O_3]$ mit Werten für x von 0,08 bis 0,8, dadurch gekennzeichnet, daß $\alpha$-$Fe_2O_3$ in wäßriger Suspension mit Co (II)-Ionen und Fe(II)-Ionen bei pH-Werten von großer 8,5 unter Inertgas bei Temperaturen zwischen 50° C und dem Siedepunkt der Suspension bei Normaldruck umgesetzt wird.

2. Verfahren gemäß Anspruch 1, dadurch gekennzeichnet, daß kobaltfreies $\alpha$-$Fe_2O_3$ eingesetzt wird.

3. Verfahren gemäß Anspruch 1, dadurch gekennzeichnet, daß kobalthaltiges $\alpha$-$Fe_2O_3$ falls zusätzlichen Co (II)-Ionen eingesetzt wird.

4. Verfahren gemäß Anspruch 1, dadurch gekennzeichnet, daß das eingesetzte $\alpha$-$Fe_2O_3$ durch thermische Zersetzung von Eisenpentacarbonyl hergestellt wird.

## Claims

1. A process for the preparation of a cobalt-containing isotropic magnetic iron oxide of the formula $(Co_xFe_{1-x})O[Fe_2O_3]$, where x is from 0.08 to 0.8, wherein $\alpha$-$Fe_2O_3$ in aqueous suspension is reacted with Co(II) ions and Fe(II) ions at a pH greater than 8.5 under an inert gas at from 50° C to the boiling point of the suspension and under atmospheric pressure.

2. A process as claimed in claim 1, wherein cobalt-free $\alpha$-$Fe_2O_3$ is employed.

3. A process as claimed in claim 1, wherein cobalt-containing $\alpha$-$Fe_2O_3$ is employed with Fe(II) ions and, if required, also Co(II) ions.

4. A process as claimed in claim 1, wherein the $\alpha$-$Fe_2O_3$ used is prepared by thermal decomposition of ironpentacarbonyl.

## Revendications

1. Procédé de préparation d'oxydes de fer magnétiques isotropes contenant du cobalt et répondant à la formule $(Co_xFe_{1-x})O[Fe_2O_3]$ dans laquelle x a des valeurs de 0,08 à 0,8, caractérisé en ce que l'on fait réagir de l'alpha -$Fe_2O_3$ en suspension aqueuse avec des ions Co-II et des ions Fe-II à des pH supérieurs à 8,5, en atmosphère de gaz inerte, à des températures comprises entre 50 degrés C et le point d'ébullition de la suspension à pression normale.

2. Procédé selon la revendication 1, caractérisé en ce que l'on met en oeuvre de l'alpha-$Fe_2O_3$ exempt de cobalt.

3. Procédé selon la revendication 1, caractérisé en ce que l'on met en oeuvre de l'alpha-$Fe_2O_3$ contenant du cobalt avec des ions Fe-II et le cas échéant un complément d'ions Co-II.

4. Procédé selon la revendication 1, caractérisé en ce que l'alpha-$Fe_2O_3$ mis en oeuvre a été préparé par décomposition à la chaleur du fer-pentacarbonyle.